# EUROPÄISCHE PATENTANMELDUNG

(11) **EP 1 985 485 A2**
(43) Veröffentlichungstag der Anmeldung: **29.10.2008**
(21) Anmeldenummer: 08007778.7
(22) Anmeldetag: 22.04.2008
(51) Int. Cl.: B60J 10/08

(54) **Flexibles Dichtungsprofil, insbesondere für Portale von Nutzfahrzeugen**

(30) Priorität: 23.04.2007 DE 202007005809 U
(71) Anmelder: GUMMI-WELZ GmbH u. Co. KG GUMMI-KUNSTSTOFFTECHNIK-SCHAUMSTOFFE, 89231 Neu-Ulm (DE)
(72) Erfinder: Fritsche, Wolfgang, 89134 Blaustein (DE); Grein, Horst, 34637 Schrecksbach (DE); Lindenthal, Gunther, 89176 Asselfingen (DE)
(74) Vertreter: König, Beate

(57) **Zusammenfassung**

Gegenstand der Erfindung ist ein Dichtungsprofil für Platten- oder Profilkörper, insbesondere Portale von Nutz- und Schienenfahrzeugen, umfassend ein Stützprofil (2) und eine mit diesem verbundene elastische Dichtleiste (4, 6). Das Stützprofil (2) weist in seiner Längsrichtung beabstandet angeordnete Schlitze (22) auf, die sich in der Profilbreitenrichtung erstrecken.

## Beschreibung

Die Erfindung betrifft Dichtungsprofil für Platten- oder Profilkörper, insbesondere Portale von Nutz- und Schienenfahrzeugen, umfassend ein Stützprofil und eine mit diesem verbundene elastische Dichtleiste.

Dichtungsprofile im Bereich der Karosserie von Fahrzeugen befinden sich meist im Bereich von Öffnungen, die häufig geöffnet und geschlossen werden. Dabei müssen sie einerseits die gewünschte Dichtfunktion erfüllen, andererseits kostengünstig herzustellen und zu montieren sein sowie eine lange Gebrauchsdauer haben.

Aufgrund der vielen verschiedenen Formen von Karosserieteilen, Platten etc. müssen entsprechend unterschiedliche Dichtungsprofile hergestellt und vorgehalten werden. Auch für die verschiedenen Kanten und Plattendicken, bedingt durch beispielsweise eine zusätzliche und/oder Fahrzeugbeplankung und/oder unterschiedlich dicke Fahrzeugbeplankung werden vielfach mehrere Dichtungsprofile benötigt.

In der DE 1 659 533 A ist ein Abdichtprofil aus zwei Werkstoffen für Scheiben, Fassadenplatten oder dergleichen beschrieben, das in Form eines fortlaufenden Bandes ausgeführt ist. Um auch bei hohem Anpressdruck eine zuverlässige Abdichtung zu gewährleisten, besteht das Abdichtprofil aus einem Stützprofil aus Kunststoff oder Metall und die Dichtleiste aus einem Kunststoffkautschuk. Für einen Einsatz an gebogenen Profilbereichen dieses Abdichtprofil nicht vorgesehen.

Das Führungsstück eines aus der DE 198 28 228 C2 bekannten Dichtsystems, das zwischen Heckportal von Kastenaufbauten von Nutzfahrzeugen und Plattformen von Hubladebühnen eingesetzt wird, weist Dichtprofil sowie ein in diesem sitzendes Stützprofil auf. Das Dichtprofil ist durch Festschrauben des Stützprofils am Heckportal montiert.

Der Erfindung liegt die Aufgabe zugrunde, ein Dichtungsprofil zu schaffen, das kostengünstig herstellbar und montierbar ist und vielseitig einsetzbar ist.

Diese Aufgabe ist durch die Erfindung bei einem Dichtungsprofil den Merkmalen des Anspruchs 1 gelöst. Vorteilhafte Weiterbildungen des erfindungsgemäßen Dichtungsprofils sind Gegenstand der Unteransprüche.

Gegenstand der Erfindung ist somit ein Dichtungsprofil für Platten- oder Profilkörper, insbesondere Portale von Nutz- und Schienenfahrzeugen, umfassend ein Stützprofil und eine mit diesem verbundene elastische Dichtleiste. Das Stützprofil weist in seiner Längsrichtung beabstandet angeordnete Schlitze auf, die sich in der Profilbreitenrichtung erstrecken.

Die Schlitze haben eine Breite und Länge entsprechend der gewünschten Flexibilität des Dichtungsprofils, gemäß der selbstverständlich auch die Dicke des Stützprofils ausgewählt ist. Sie ermöglichen eine Anpassung des Dichtungsprofils an die seitliche Kontur des Fahrzeugs und sein bündiges Anliegen auch bei gekrümmten Konturen der abzudichtenden Platte. Für das Biegen des Dichtungsprofils wird keine große Kraft benötigt.

Trotz der zweiteiligen Konstruktion mit Stützprofil und Dichtleiste hat das erfindungsgemäße Dichtungsprofil eine geringe Materialhöhe.

Vorteilhaft kann die Dichtleiste des erfindungsgemäßen Dichtungsprofils auf das Stützprofil aufgesetzt werden. Dadurch ist es möglich, trotz notwendig unterschiedlicher Dichtungsausgestaltungen für verschiedene Kanten des mit dem Dichtungsprofil auszustattenden Platten- oder Profilkörpers sowie auch für verschiedene Dicken der Kante desselben nur ein Stützprofil vorzusehen. Auf dieses werden dann die jeweiligen Dichtleisten aufgesetzt oder eingeschoben. Meistens wird es sich im Fall von Fahrzeugportalen um ein Gummiprofil für die Seite und eines für oben handeln.

Bei einer bevorzugten Ausführungsform der Erfindung ist das Stützprofil ein Eckprofil, das die Außenkante des Platten- oder Profilkörpers umgreift. Durch die Schlitze ist auch das Umgreifen von Eckbereichen der Außenkante möglich.

Vielfach ist das Stützprofil des erfindungsgemäßen Dichtungsprofils beim Einsatz für Portale von Nutz- und Schienenfahrzeugen ein T-Profil, von dem sich zwei benachbarte Schenkel entlang des Platten- oder Profilkörpers erstrecken und sich der dritte Schenkel in Richtung der Portalöffnung erstreckt. Dadurch ist die erforderliche Stabilität in Richtung beispielsweise einer gegen das Dichtungsprofil laufenden Tür sichergestellt.

Für eine leichte Montage weisen ein erster und ein zweiter Schenkel des Stützprofils an ihren Enden eine Abkröpfung für die Aufnahme von Montagelippen der Dichtleiste auf. Die Dichtleiste kann dann einfach von Hand ohne Zusatzwerkzeuge montiert werden. Der abgekröpfte Endbereich kann in bezug auf den Spriegel nach außen abgesetzt bzw. beabstandet sein oder umgekehrt dem Spriegel näher sein und dann dem Stützprofil und dem durch dieses versteiften Dichtungsprofil durch diese Positionierung eine zusätzliche Festigkeit verleihen.

Am Ende des ersten und/oder zweiten Schenkels des Stützprofils können Kerben vorgesehen sein, um der Verbindung Stützprofil mit Dichtprofil eine höhere Festigkeit zu geben.

Das Stützprofil kann mit einer Schlagdämpfung ausgestattet sein, beispielsweise zum Schutz einer Scheibe. Zur Schlagdämpfung kann eine weiche Auflage, insbesondere ein Klebeband, auf das Stützprofil aufgebracht sein.

Vorzugsweise sind die Enden der Dichtleiste Dichtlippen und zweckmäßig ist die eine sich auf der Außenseite des Platten- oder Profilkörpers befindende Dichtlippe kurz. Insbesondere, wenn außerdem eine Montagelippe vorhanden ist, liegt die Dichtleiste dann sicher und fest durch die so vorhandene Vorspannung an.

Wenn die sich in Richtung der Platten- oder Profildicke erstreckende Dichtlippe verhältnismäßig lang und mit Vorspannung nach innen ausgeführt ist, können mittels dieser Dichtlippengestalt verschiedene Stärken der Fahrzeughaut überbrückt bzw. ausgeglichen werden, die sich durch unterschiedliche Kombinationen von Spriegel, Scheibe und/oder Beplankung und unterschiedliche Dicken derselben ergeben. Beispielsweise ist es möglich, dasselbe Stützprofil für die Abdichtung eines reinen Spriegels, eines Spriegels mit Scheibe und relativ dünner Fahrzeugbeplankung und eines Spriegels mit Scheibe und relativ dicker Fahrzeugbeplankung und zugleich jeweils dieselbe Dichtleiste für die verschiedenen Stärken von Spriegel, Scheibe und Beplankung zu verwenden. Je nach der zu überbrückenden Dicke liegt die Dichtlippe dann an der Stirnseite der abzudichtenden Kante an oder umgreift diese mehr oder weniger weit.

Bei einer anderen vorteilhaften Ausführung des erfindungsgemäßen Dichtungsprofils ist die sich in Richtung der Platten- oder Profildicke erstreckende Dichtlippe scharnierartig auslenkbar. Hierzu kann beispielsweise zur Bildung eines Scharnierbereichs ein Bereich mit geringerer Materialstärke und damit höhere Flexiblität vorgesehen sein, wobei das Ende des Schenkels dann wieder dicker und nach innen vorgespannt ist. Durch unterschiedlich starke Auslenkung des betreffenden Dichtungsschenkels erfolgt eine Anpassung an die verschiedenen zu überbrückenden Dicken.

Vorzugsweise weist die Dichtleiste am Ende des dritten Schenkels eine Dichtlippe auf, die für eine Abdichtung zu und Anlage an beispielsweise einer Fahrzeugtür vorgesehen ist.

Bei einer vorteilhaften Ausführungsform des erfindungsgemäßen Dichtungsprofils ist die Dichtleiste mit einer Schlagdämpfung für einen Tür- oder Fensteranschlag versehen. Diese kann in einer Profilierung oder Ausgestaltung mit einer Anzahl von Rippen bestehen, die beim Türanschlag elastisch nachgeben.

Eine sichere Montage des Dichtungsprofils ergibt sich, wenn das Stützprofil in Abständen Löcher für eine Verschraubung aufweist.

Zweckmäßig ist das Stützprofil ein Metall-, insbesondere Aluminiumprofil und/oder die Dichtleiste aus Gummi oder thermoplastischem Elastomer.

In speziellen Anwendungsfällen können das Stützprofil und die Profilleiste zusätzlich bereichsweise durch Schweißen, Verkleben oder Vulkanisieren miteinander verbunden sein. Dies ist durch die Abstimmung der jeweiligen Konturen des Dichtungsprofils ermöglicht.

Für etliche Anwendungsfälle ist die Dichtlippe am Ende des dritten Schenkels mit einem Gleitlack (Schutzlack) versehen. Vorzugsweise ist dieser seitlich und oben an den Berührungsstellen mit der Tür aufgebracht. Als Gleitlack werden z.B. Polyurethan- oder Gummibeschichtungen eingesetzt. Alternativ kann auch eine Flockschicht, z.B. aus Polyamid, verwendet werden.

Die Erfindung wird im folgenden weiter anhand von Ausführungsbeispielen und der Zeichnung beschrieben. Diese Darstellung dient lediglich zur Veranschaulichungszwecken und soll die Erfindung nicht auf die konkret angegebenen Merkmalskombinationen einschränken. Es zeigen:
- Fig. 1: eine Prinzipdarstellung eines Portalrahmens mit erfindungsgemäßem Dichtungsprofil, bestehend aus Stützprofil und Dichtleiste,
- Fig. 2: (a) eine Seitenansicht, (b) eine vergrößerte Stirnansicht und (c) eine vergrößerte Ansicht des Ausschnitts B in Fig. 2 (a) des Stützprofils,
- Fig. 3: (a), (b), (c) schematische Ansichten des erfindungsgemäßen Dichtungsprofils an der Portalrahmenseite im Einsatz nur mit Spriegel, mit Spriegel, Scheibe und verhältnismäßig dünner Fahrzeugbeplankung und mit Spriegel, Scheibe und verhältnismäßig dicker Fahrzeugbeplankung,
- Fig. 4: (a) und (b) schematische Ansichten des erfindungsgemäßen Dichtungsprofils an der Portalrahmenseite im Einsatz nur mit Spriegel sowie mit Spriegel, Scheibe und Fahrzeugbeplankung und mit der Tür,
- Fig. 5: (a), (b), (c) schematische Ansichten des erfindungsgemäßen Dichtungsprofils oben am Portalrahmen im Einsatz nur mit Spriegel, mit Spriegel, Scheibe und verhältnismäßig dünner Fahrzeugbeplankung und mit Spriegel, Scheibe und verhältnismäßig dicker Fahrzeugbeplankung,
- Fig. 6: eine schematische Ansicht einer weiteren Ausführungsform des erfindungsgemäßen Dichtungsprofils für die Portalrahmenseite und
- Fig. 7: eine schematische Ansicht einer der Ausführung von Fig. 6 entsprechenden weiteren Ausführungsform des erfindungsgemäßen Dichtungsprofils für den oberen Portalrahmen.

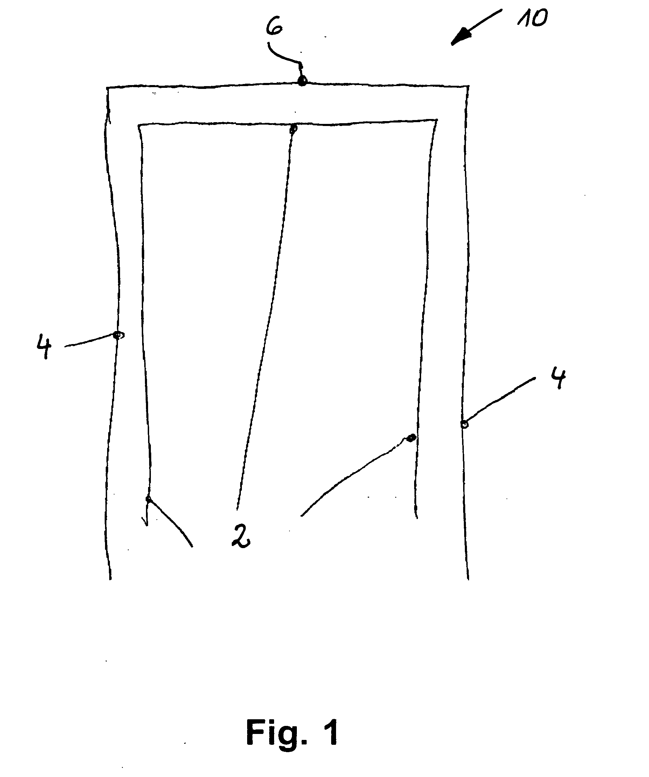

Fig. 1 veranschaulicht den Grundaufbau eines Dichtungsprofils gemäß der Erfindung anhand einer schematischen Ansicht eines Portalgesamtrahmens 10. Dieser ist umschlossen von einem Aluminiumprofil 2, das die Stützleiste des Dichtungsprofils bildet und an die Fahrzeugwand angepasst ist. Auf das Aluminiumprofil montiert ist ein Gummiprofil 4, 6, das die Dichtleiste des Dichtungsprofils bildet. Das Aluminiumprofil 2 ist für alle Rahmenseiten gleich, während das Gummiprofil 4 auf den beiden Seiten gleich ist, oben aber das Gummiprofil 6 anders als das Gummiprofil 4 ausgebildet ist.

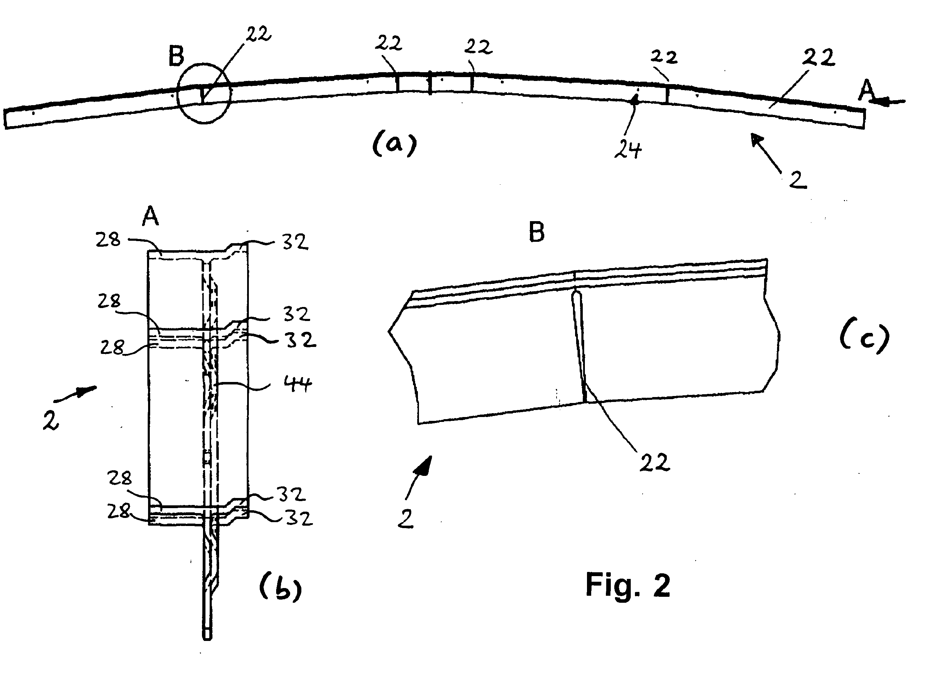

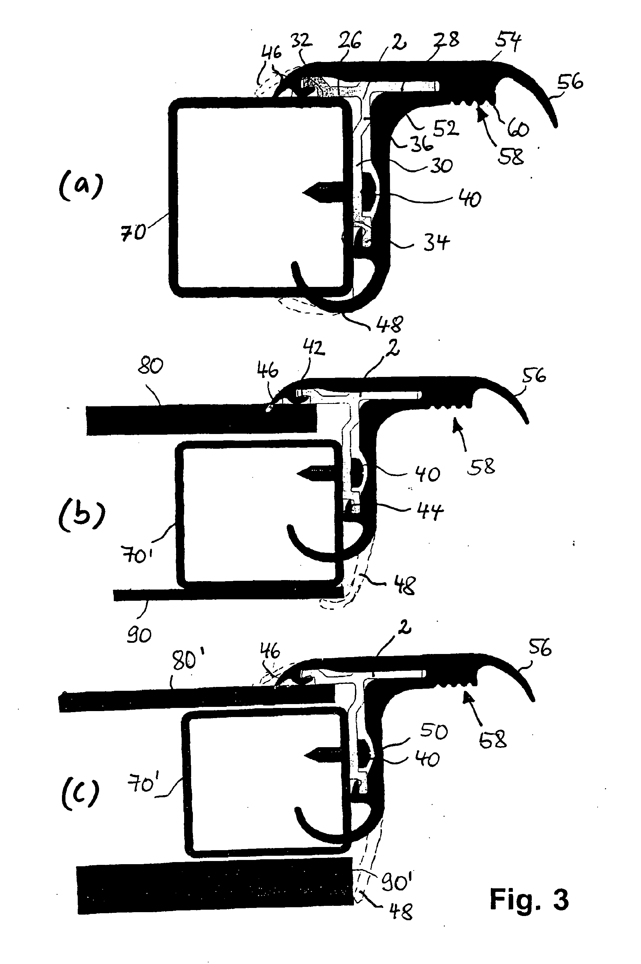

Das Aluminiumprofil 2, das wie erwähnt die Stützleiste des Dichtungsprofils bildet und im folgenden auch so bezeichnet wird, ist in Fig. 2 mehr im einzelnen veranschaulicht, wobei sich ihre Gestalt weiter aus den Darstellungen der Fig. 3 bis 5 ergibt. Die Stützleiste 2 ist ein langgestreckter Profilstreifen. Durch ihre Flexibilität kann sie leicht an die Gestalt des Portalrahmens angepasst werden. Um dies zu erleichtern, ist sie mit Schlitzen 22 versehen. Die Anzahl, der Abstand und die Abmessungen, d.h. Breite und Tiefe der Schlitze 22 werden entsprechend der gewünschten Flexibilität gewählt. Löcher 24 sind im erforderlichen Abstand für eine Verschraubung mit dem Portalrahmen vorgesehen.

Der Querschnitt des Stützprofils 2 ist im wesentlichen T-förmig, wie am besten aus Fig. 3 bis 5 ersichtlich ist, die das montierte Stützprofil zeigen. Der in diesen Figuren in Richtung des Spriegels weisende T-Schenkel 26 ist ebenso wie das untere Ende des Hauptschenkels 30 an seinem Ende 32, 34 für die Montage der Dichtleiste 4 abgekröpft. Der andere T-Schenkel 28 ist für die Aussteifung der Dichtleiste 4 in Richtung einer zu dem Portalrahmen zugehörigen Tür vorgesehen.

Das Stützprofil 2 ist am Portalrahmen 10 mittels Schrauben 40 befestigt. Die Dichtleiste 4, 6 ist jeweils mittels Montagelippen 42, 44 in den abgekröpften Enden 32, 34 des Stützprofils 2 durch Clipsen verankert. In Fig. 3(a), (b) und (c) ist in gestrichelter Darstellung die Position der betreffende Dichtlippe 46 nach dem Clipsen zu sehen.

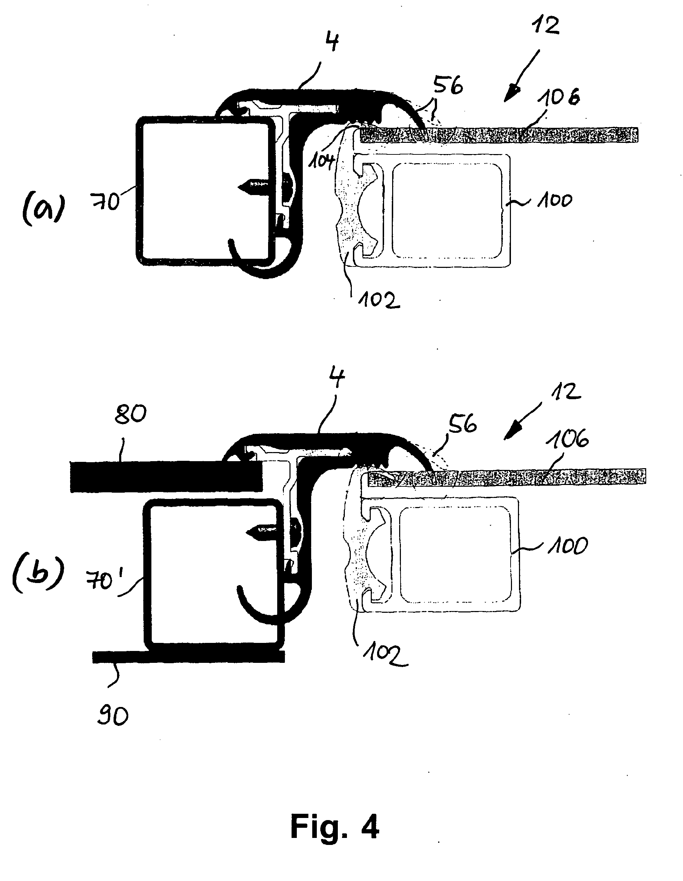

Zunächst werden Einzelheiten der für die Rahmenseiten vorgesehenen Dichtleiste 4 anhand von Fig. 3 und 4 erläutert. Fig. 3(a) veranschaulicht die Abdichtung des Spriegels 70. Die untere gegenüberliegende Dichtlippe 48 der Dichtleiste 4 liegt an der entsprechenden gegenüberliegenden Seite des Spriegels 70 an, wie die gestrichelte Darstellung veranschaulicht. Sie ist lang und flexibel, so dass sie in verschiedenen Auslenkungen und Anordnungen sein kann. Auf diese Weise kann sie die unterschiedlichen Dicken des jeweiligen Rahmens ausgleichen, wie im folgenden noch veranschaulicht wird.

Die Dichtleiste 4 weist im Bereich gegenüberliegend der Schraube 40 eine dünnere Zone 50 mit einer Einwölbung auf, um für diese ausreichend Raum vorzusehen. Der Bereich 52 des Übergangs des Hauptschenkels 30 zum T-Schenkel 28 ist materialverstärkt und liegt an einem abgekröpften Bereich 36 des Hauptschenkels 30 an. Am Ende des T-Schenkels 28 setzt sich der betreffende Dichtleistenbereich 54 massiv fort und geht am Ende in eine flexible Lippe 56 über. An der Innenseite ist die Dichtleiste innen mit einer Dämpfungszone 58 versehen. Diese ist durch eine Anzahl von Rippen 60 ausgebildet. Zur Verbesserung der Gleiteigenschaft ist die Dichtleiste im Bereich der Dämpfungszone mit Gleitlack beschichtet.

Fig. 3 (b) veranschaulicht die Anordnung des Dichtungsprofils 4 im Fall eines Spriegels mit Scheibe 80 und verhältnismäßig dünner Fahrzeugbeplankung 90. Die Profilleiste 2 ist am Spriegel 70' außermittig montiert, um die Dicke der Scheibe 80 auszugleichen, auf der der T-Schenkel 26 aufliegt. Die Dichtlippe 46 liegt an der Scheibe 80 auf. Die Dichtlippe 48 umgreift die Fahrzeugbeplankung 90.

In Fig. 3 (c) ist die Anordnung ähnlich Fig. 3 (b) für den Fall einer verhältnismäßig dicken Fahrzeugbeplankung 90' gezeigt. Es werden wiederum nur die abweichenden Merkmale beschrieben. Die lange Dichtlippe 48 liegt an der Stirnseite der Fahrzeugbeplankung 90' an.

Fig. 4 (a) und (b) veranschaulichen die Anordnung von Fig. 3(a) und (b) im Zusammenwirken mit einer Fahrzeugtür 12. Von dieser gezeigt sind ein Türprofil 100 mit Stirndichtleiste 102. Auf der Außenseite der Fahrzeugtür ist die Türbeplankung/Scheibe 106. Die Dichtlippe 56 der Dichtleiste 4 liegt an der Türbeplankung 106 , während sich die Tür mit der Stirndichtleiste 102 bzw. deren Außenlippe 104 im Bereich der Dämpfungszone 58 als Anschlag/Dichtung befindet.

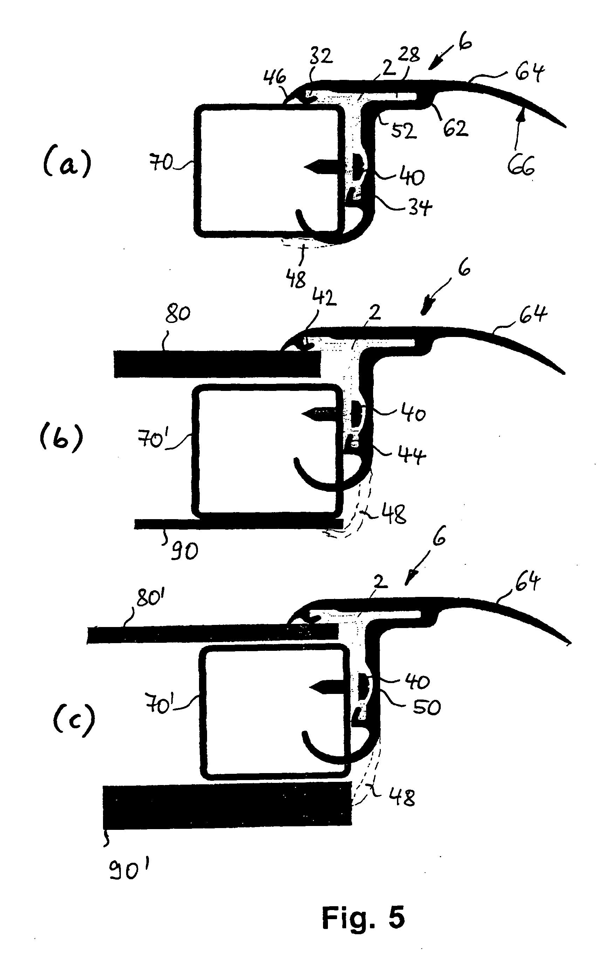

Die Ausführung der Dichtleiste 6 für die Rahmenoberseite ist in Fig. 5 wieder anhand der Anordnung nur mit Spriegel bzw. Spriegel, Scheibe und Fahrzeugbeplankung (dünn/dick) veranschaulicht. Wiederum sind die Teile, die den vorhergehenden Figuren entsprechen, mit denselben Bezugszeichen bezeichnet und werden nicht erneut beschrieben. Am Ende des T-Schenkels 28 ist die Dichtleiste 6 zur Außenseite umgebogen. Diese setzt sich vom Ende des T-Schenkels 28 aus in einer langgestreckten Dichtlippe 64 fort, die für einen Eingriff mit der Tür 12 vorgesehen ist. Im Berührungsbereich 66 mit der Tür ist die Dichtlippe 64 mit Gleitlack beschichtet.

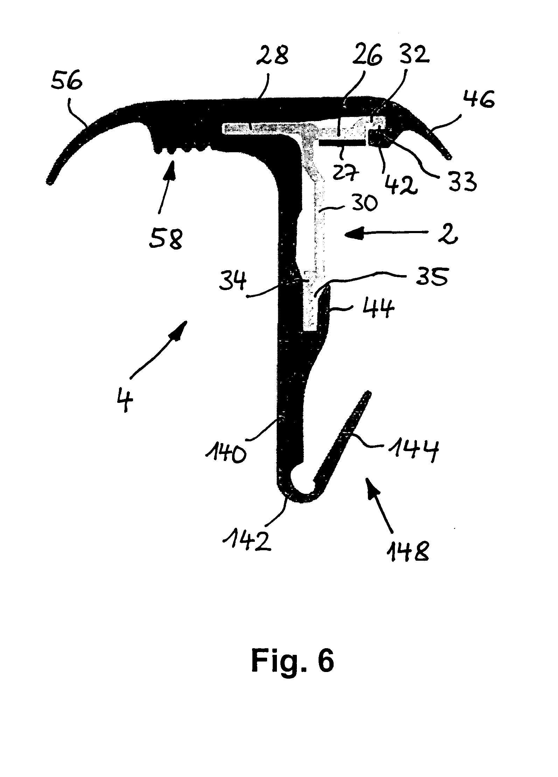

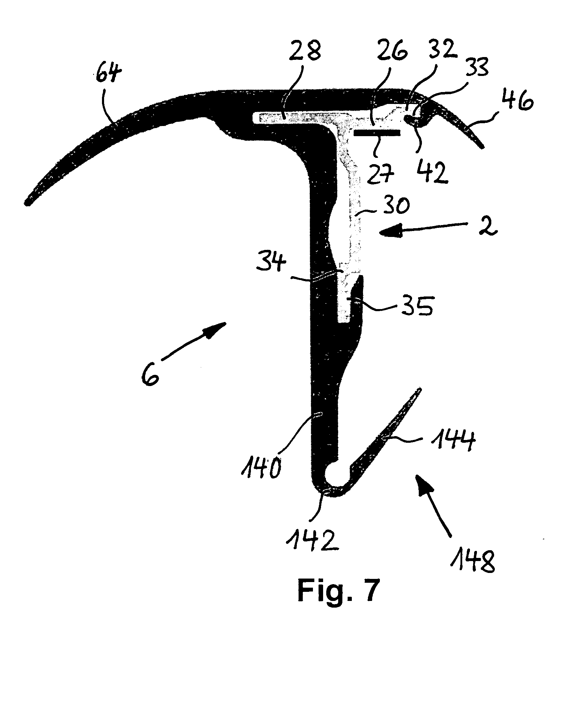

Im folgenden werden weitere Ausführungsformen des erfindungsgemäßen Dichtungsprofils anhand von Fig. 6 und 7 für die Rahmenseiten bzw. Rahmenoberseite erläutert. Die Teile, die den vorhergehenden Figuren entsprechen, sind mit denselben Bezugszeichen bezeichnet und werden nicht erneut beschrieben. Die Schenkel 26, 30 des Stützprofils weisen an den Enden Kerben 33, 35 auf, die der Verbindung Stützprofil mit Dichtprofil eine größere Festigkeit verleihen. Auf der Unterseite weist der Schenkel 26 des Stützprofils eine Dämpfungsschicht 27 auf, die beispielsweise für den Anschlag an einer Fensterscheibe eine Dämpfung liefert. Im vorliegenden Fall ist als Dämpfungsschicht 27 ein weiches Klebeband aufgebracht worden.

Die für das Umgreifen der Fahrzeugbeplankung vorgesehene Dichtlippe 148 ist über ein Scharnier 142 am T-förmigen Hauptkörper 140 der Dichtleiste angelenkt und endet in einer sich verjüngenden Dichtlippe 144, die in Richtung des Hauptkörpers 140 elastisch vorgespannt ist. Durch unterschiedlich starke Auslenkung der Dichtlippe 144 kann eine Anpassung an unterschiedliche Dicken erfolgen.

## Patentansprüche

1. Dichtungsprofil für Platten- oder Profilkörper, insbesondere Portale von Nutz- und Schienenfahrzeugen, umfassend ein Stützprofil und eine mit diesem verbundene elastische Dichtleiste, **dadurch gekennzeichnet, dass** das Stützprofil (2) in seiner Längsrichtung beabstandet angeordnete Schlitze (22) aufweist, die sich in der Profilbreitenrichtung erstrecken.

2. Dichtungsprofil nach Anspruch 1, **dadurch gekennzeichnet, dass** die Dichtleiste (4, 6) auf das Stützprofil (2) aufgesetzt oder aufgeschoben ist.

3. Dichtungsprofil nach Anspruch 1 oder 2, **dadurch gekennzeichnet, dass** die Dichtleiste (4) mit einer Schlagdämpfung (58) für einen Tür- oder Fensteranschlag versehen ist.

4. Dichtungsprofil nach einem der Ansprüche 1 bis 3, **dadurch gekennzeichnet, dass** das Stützprofil (2) ein Eckprofil ist, das die Außenkante des Platten- oder Profilkörpers umgreift.

5. Dichtungsprofil nach Anspruch 4, **dadurch gekennzeichnet, dass** das Stützprofil (2) ein T-Profil ist, von dem sich zwei benachbarte Schenkel (26, 30) entlang des Platten- oder Profilkörpers erstrecken und sich der dritte Schenkel (28) in Richtung der Portalöffnung erstreckt.

6. Dichtungsprofil nach Anspruch 2 und 4 oder 5, **dadurch gekennzeichnet, dass** ein erster und ein zweiter Schenkel (26, 30) des Stützprofils (2) an ihren Enden eine Abkröpfung (32, 34) für die Aufnahme von Montagelippen (42, 44) der Dichtleiste (4, 6) aufweisen.

7. Dichtungsprofil nach einem der Ansprüche 1 bis 6, **dadurch gekennzeichnet, dass** an den Enden eines ersten und zweiten Schenkels (26, 30) des Stützprofils (2) Kerben (33, 35) vorgesehen sind.

8. Dichtungsprofil nach einem der Ansprüche 1 bis 7, **dadurch gekennzeichnet, dass** das Stützprofil (2) mit einer Schlagdämpfung versehen ist.

9. Dichtungsprofil nach einem der Ansprüche 1 bis 8, **dadurch gekennzeichnet, dass** die Enden der Dichtleiste (4, 6) Dichtlippen (46, 48, 56, 64) sind.

10. Dichtungsprofil nach Anspruch 9, **dadurch gekennzeichnet, dass** die eine sich auf der Außenseite des Platten- oder Profilkörpers befindende Dichtlippe (46) kurz ist.

11. Dichtungsprofil nach Anspruch 9 oder 10, **dadurch gekennzeichnet, dass** die sich in Richtung der Platten- oder Profildicke erstreckende Dichtlippe (48) verhältnismäßig lang und mit Vorspannung nach innen ausgeführt ist.

12. Dichtungsprofil nach Anspruch 11, **dadurch gekennzeichnet, dass** die sich in Richtung der Platten- oder Profildicke erstreckende Dichtlippe (48) mit einer Länge ausgeführt ist, dass sie im Falle des Vorhandenseins zumindest an der Stirnseite einer abzudichtenden Fahrzeugbeplankung anliegt und ansonsten die abzudichtende Kante umgreift.

13. Dichtungsprofil nach Anspruch 12, **dadurch gekennzeichnet, dass** die sich in Richtung der Platten- oder Profildicke erstreckende Dichtlippe (148) scharnierartig auslenkbar ist.

14. Dichtungsprofil nach einem der Ansprüche 10 bis 13, **dadurch gekennzeichnet, dass** die Dichtlippe (4, 6) am Ende des dritten T-Schenkels (28) mit einem Gleitlack versehen ist.

15. Portalrahmen für ein Nutzfahrzeug oder Schienenfahrzeug, **dadurch gekennzeichnet, dass** es mit Dichtungsprofilen nach einem der Ansprüche 1 bis 14 versehen ist.

16. Portalrahmen nach Anspruch 15, **dadurch gekennzeichnet, dass** die Stützleiste (2) oben und seitlich dasselbe Profil hat.
